# EUROPEAN PATENT SPECIFICATION

(11) **EP 1 070 402 B1**
(45) Date of publication and mention of the grant of the patent: **19.11.2008**
(21) Application number: 99918413.8
(22) Date of filing: 30.03.1999
(51) Int. Cl.: H04L 12/18, H04M 3/56

(54) **IMPROVEMENTS WITH REGARD TO SECURITY IN DATA CONFERENCES**
VERBESSERUNG BEZÜGLICH SICHERHEIT BEI DATENKONFERENZEN
AMELIORATIONS CONCERNANT CONCERNANT SECURITE POUR DES TELECONFERENCES DE DONNEES

(30) Priority: 01.04.1998 SE 9801152
(43) Date of publication of application: 24.01.2001
(73) Proprietor: TELIASONERA AB, 106 63 Stockholm (SE)
(72) Inventor: HEDQVIST, Torbjörn, S-392 33 Kalmar (SE)
(74) Representative: Hopfgarten, Nils
(86) International application number: PCT/SE1999/000517
(87) International publication number: WO 1999/050994

(56) References cited:
- EP-A2- 0 691 780
- EP-A2- 0 758 827
- EP-A2- 0 779 732
- EP-A2- 0 817 451
- WO-A1-97/37484
- US-A- 5 673 080

## Description

The present invention relates to a telecommunications system adapted to support data conferences in which a plurality of participant computers are cooperatively linked, methods of providing data conferences in which a plurality of participant computers are cooperatively linked and a control unit for controlling a data conference in which a plurality of participant computers are cooperatively linked.

There is a need, in many spheres of activity, to improve the efficiency of cooperation between geographically distributed organizations. A serious problem, in relation to cooperative interworking requiring the exchange of data, is ensuring the safety and security of data. More specifically, the problem is to effect adequate supervision and control over the security of data and, at the same time, provide the necessary flexibility for effective conference working where two, or more, computers are connected over a data network and cooperate on a common data, or working, server.

It is an object of the present invention to provide a telecommunications system for the safe and secure support of data conferences.

So far as we know, there is no product currently in existence that provides the functionality of the present invention. Furthermore, so far as we currently know, no attempts have been made to resolve the conflict inherent in data conferencing between flexibility and data security/safety.

The patent document WO-A1-97/37484 relates to a multimedia conference system, having a data communication network coupled to which are a plurality of client stations, a meeting server and a presentation server. The system is embodied by a client-serer based collaborative application that allows users to share multimedia documents on any of PC, MAC or UNIX based hardware platforms. The client-server architecture allows centralised billing, secure document storage, secure document transmission and centralised administration. Multiple clients may interface with the server or servers via a telecommunications network and the data communications network which preferably is the Internet, whereby users at geographically dispersed locations are able to participate in a meeting session.

The patent document US-5.673.080 discuses a method of establishing multimedia conferences between a multimedia server and a plurality of endpoint devices. One or more of these endpoint devices are enhanced in that they include a memory adapted to store one or more telephone numbers, each telephone number corresponding to a respective endpoint device, and a user interface coupled to the memory of selecting a telephone number stored in the memory. The methods are performed in a substantially continuous manner, signifying that a third endpoint device is added to a pre-existing conference. Therefore, a seamless multimedia conference is provided between the first and second enhanced endpoint devices even when a third endpoint device is added to the conference.
The document "JETS: a Java-Enabled TeleCollaboration System". Shirmohammadi S. et al, 3 June 1997, IEEE, US, (XP10239230), relates to a generic, multiuser/collaborative system which enables the real-time sharing of Java applets through the Internet. In order to have a small response time, JETS was designed to be highly multi-threaded. For each application, there is a server running which in turn consists of smaller servers that run as separate threads and handle clients' requests with a small delay. This means that clients can independently interact with the application and get immediate response. Depending on the nature of the application, that response could be acceptance or rejection of the client's action. The server always keeps track of the latest state of the application. When a new user joins, the server sends the latest state to the new user. There is also mentioned the use of a firewall or using encryption for documents in order to protect the participants.

The documents "LAN Based Real Time Audio-Graphics Conferencing System", Soares L.F.G. et al, 23 April 1989, IEEE, US, (XP10015416), relates to an audio-graphics teleconferencing system. LANBRETA-GCS. The specification presented is not a specification of a particular system implementation. The objective of this document was to present the basic functions of the system, a macro system specification and an example of a system implementation, demonstrating its viability under a local area network environment. The present invention can be used in a variety of electronic conferences and provides a secure and safe environment for data exchange while, at the same time, allowing for flexible operation. Situations where electronic conferencing can be used with great advantage include:
- product development projects in the engineering industry;
- budgetary planning and revision;
- marketing meetings in marketing organisations which are geographically dispersed;
- construction meetings in big building projects;
- technical maintenance work;
- technical support;
- administration of complaints; and
- in connection with education.

Throughout the whole of society, there are big advantages to be gained by employing information technology to provide cooperation and conferencing at a distance. Such arrangements are analogous to multi-party telephone calls, or audio conferencing. However, the IT techniques available today mean that it should be possible, not simply to have audio conferences, but to provide, in addition, multimedia links enabling a conference group to look at pictures, models, make common drawings in a document etc..

There are a whole range of products currently on the market, e.g. video conference equipments, collaborative software, etc., which facilitate different aspects of tele-conferencing.

However, a real problem with all the products and services currently available is the data security risks associated with tele-based advanced conferences. The present invention addresses and solves this problem.

The metaphor for the present invention, is based on the fundamentals of a real world conference, operated without the benefits of IT, and the way in which security is provided in such a conference.

The normal routine, in a company, or an organization, which is hosting a conference, is to bring the participants together in a conference room on the organising entity's premises. The conference room has all the means (conference tables, OH-projector, whiteboard, video recorder) that are needed to support the meeting. External visitors, who are going to attend the conference, arrive at a reception facility, sign into a visitors' register, are given visitor badges and are accompanied into the conference room. At the end of the meeting, the visiting participants are escorted off the premises and their departure is noted down in the visitors' register.

The present invention is based on the same functionality. This is achieved by means of an arrangement of computers and safety functions, which give a chairperson, hosting the meeting, the ability to "meet and fetch" visitors to a computerized conference room, "supervise and control" the activities of the participants during the meeting and, at the end of the conference, "accompany the participants out" and "close and lock the conference room".

The system of the present invention does not limit the conferencing tools which can be deployed in the "conference room". This further strengthens the metaphor that the system is a conference room.

The present invention resides in the realisation of a real world conference system in cyberspace by the use of an appropriate computer architecture.

According to a first aspect of the present invention, there is provided a telecommunications system, adapted to provide a platform for tele-conferencing in which data can be exchanged between participants and in which conference proceedings are conducted on a conference server located within an internal data network, characterised in that participants' computers are connected to said conference server via an external data network and reception computer and in that said conference is controlled via a control and supervision computer.

According to a second aspect of the present invention, there is provided a method of data conferencing using a telecommunications system in which data can be exchanged between participants and in which conference proceedings are conducted on a conference server located in an internal data network, characterrised by connecting participants' computers to said conference server via an external data network and reception computer and controlling access to, and participant behaviour on, said conference server via a control and supervision computer.

According to a third aspect of the present invention, there is provided a data conference unit, for use with a telecommunications system in which data can be exchanged between participants, said data conference unit adapted to operate in an internal data network protected by a firewall, characterised in that said data conference unit includes a conference server on which conference proceeding may be conducted, a reception computer, connected to said conference server, said reception computer adapted for connection to conference participants' computers, via an external data network, and a control and supervision computer connected to said conference server and said reception computer and adapted to control access to, and participant behaviour on, said conference server.

Said conference server, said reception computer and said control and supervision computer may be a single data processing machine having functionally distinct modules for providing data conference facilities, reception control and conference control.

Alternatively, said conference server, said reception computer and said control and supervision computer may be separate and distinct data processing machines linked by data connections which are distinct from, and not directly connected to, said internal data network.

Data transmission between said participants' computers and said conference server may empioy IP.

Said control and supervision computer may be adapted to provide a conference leader with dynamic control over participants' access and use of said conference server.

Said reception computer may provide a firewall preventing access by conference participants to said internal data network.

Said control and supervision computer may enable a conference leader to control said reception computer and thence to control admission to a conference being run on said conference server.

Admission to said conference server may be controlled by non-recurrent passwords issued to participants.

An audio conference facility may operate in conjunction with said conference server.

Said non-recurrent passwords may be issued to participants by a conference leader in a voice communication over said audio conference facility.

Admission to said conference server may be controlled by non-recurrent passwords issued by a conference leader to participants in a voice communication over said audio conference facility.

Said control and supervision computer may enable a conference leader to activate applications software resident on said conference server and to control computer files accessed by said conference server, including files containing documents, drawings, calculations, simulations and video film.

Said control and supervision computer may report all attempts to access said conference server to a conference leader.

Said control and supervision computer may maintain a log and audit trail of a conference conducted on said conference server.

Said conference server may have a number of software applications resident thereon, including: word processing, a database, a spreadsheet, a graphics package, a video streamer and a video conference package.

Said participants to said conference may, via participant's computers and subject to control and supervision by said conference leader, access and manipulate software and data resident on said conference server, and thereby cooperatively interact with each other and said conference leader.

Embodiments of the invention will now be described, by way of example, with reference to the accompanying drawings, in which:
Figure 1 illustrates, in schematic form, a computer architecture on which the present invention is based.
Figure 2 illustrates the conference metaphor underlying the present invention.

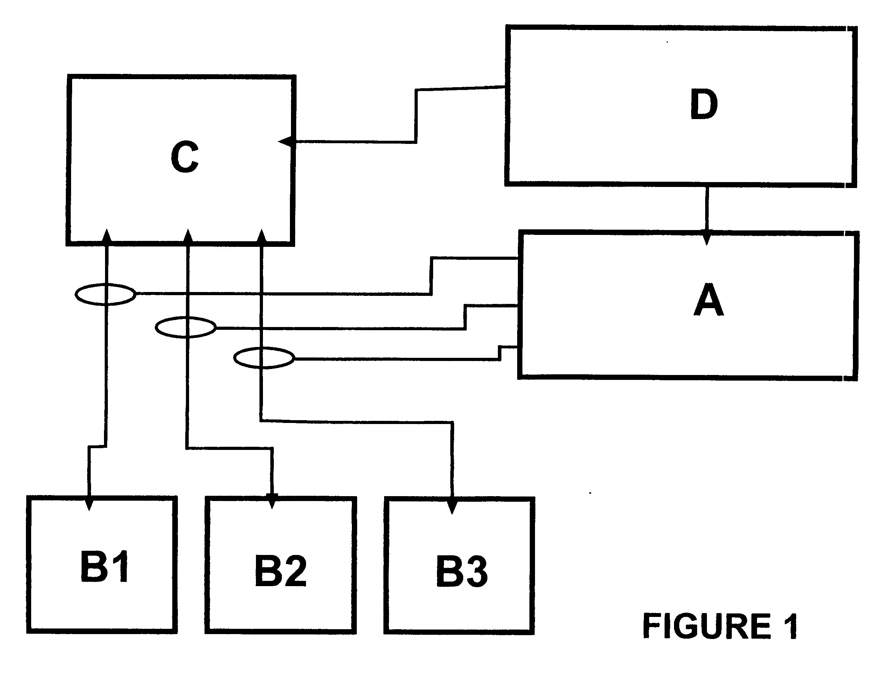

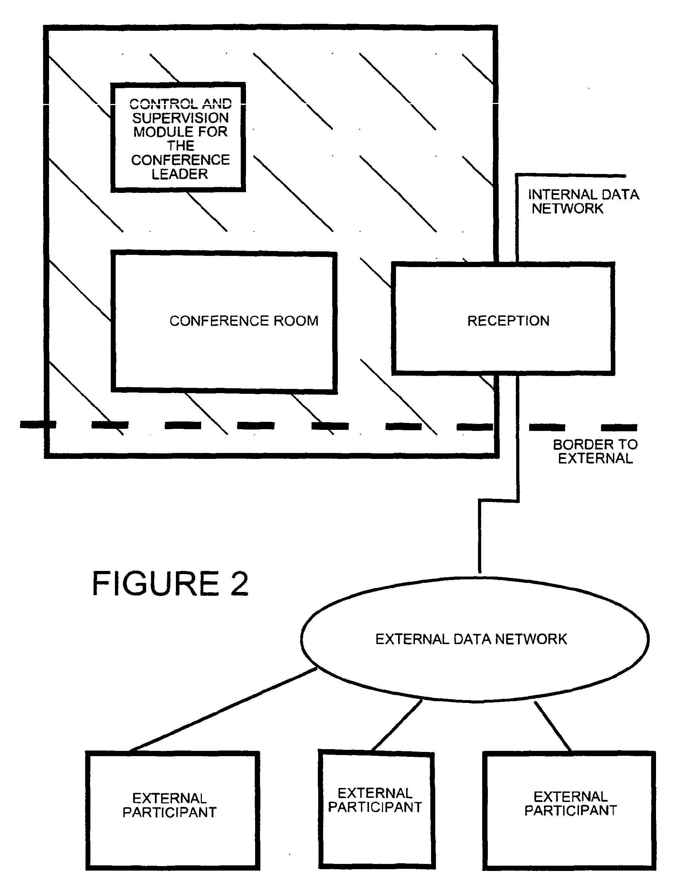

Referring to Figure 1, the present invention comprises an arrangement of intercommunicating computers. A specially configured computer A, controls, checks and supervises all data traffic between a number of computers B1, B2, B3,...., belonging to conference participants and a third computer C, on which is held a central data store used by all conferees. Computer A corresponds to the reception unit of Figure 2 and computer C is the conference server, i.e. the conference room of Figure 2. A fourth computer D, belongs to the conference chairperson and is connected, with special privileges, to the computers A and C. The computer D, which corresponds to the control and supervision module of Figure 2. is programmed so that the operator can, dynamically and with full oversight, selectively instruct the computer A to permit, or deny, the operators of the computers B1, B2, B3, ... to exchange data traffic with the computer C. This architecture creates a situation where the leader of a tele-ccnfsrence meeting can, in a manner which is similar to the operation of a normal meeting in a conference room, control and check who participates in the meeting and what the different participants do.

The conference metaphor, for the present invention, is illustrated in Figure 2. Within the borders of an internal data network, there is provided a reception unit, corresponding to computer A of Figure 1, which links the main data server, controlled by computer C, of Figure 1, to an external data network and external participants, i.e. the remote computers B1, B2, B3, of Figure 1. Computer D, of Figure 1, corresponds to the control and supervision module for the conference leader. The main data server, or conference server, is located in the conference leader's internal data network, which may be protected by a firewall. The reception unit provides a point of controlled ingress through the firewall. This ensures that all conference links to the outside world and eternal data networks are securely controlled and monitored.

The computers A, C and D of Figure 1, i.e. the reception unit, the conference room and, the control and supervision module may be realised on a single data processing machine. However, for reasons of maintaining maximum data security, there is a considerable advantage in using stand alone machines for these functions and linking the machines through appropriate data links which operate independently of, and are not directly connected to, the conference leaders internal data network.

The present invention assumes that the majority of communicating business systems will, technically, be based on IP-architectures.

The invention facilitates the provision of a safe and flexible dynamic conference environment in an intranet/extranet/internet architecture.

The present invention meets the following requirements:
(a) Electronic simulation of an ordinary conference environment, or conference room, by an IP-environment.
(b) Provides the conference leader, or chairperson, with dynamic control over the persons participating in the conference, in particular the ability to permit, or deny, participation in the conference.
(c) An effective barrier, or firewall, is provided to prevent participants in penetrating the data network of the conference chairperson, beyond the conference facility.
(d) The conference chairperson has the ability to control the establishment of the conference and the method by which the conference is established. In particular, the chairperson has control over admissions to the conference. Initially the conference starts with "an empty conference room".
(e) The conference can include both data and voice transmission, so that delegates to the conference can speak to each other. Techniques for audio conferencing are well known in the art and will not be further described in this specification.
(f) The conference may be set up, or be initiated, by the chairperson placing telephone calls to the other participants. During this step, each participant is given a non-recurrent password to enable access to the conference. The password acts as an "entry badge" for conference participants.
(g) The conference is realised on a conference server, the chairperson's working machine, to which access, and participant behaviour on, is controlled by an administration computer, which may, in turn be controlled, or operated, by the chairperson.
(h) It is by operation of the administration computer that the chairperson accepts, rejects, or excludes participants. It is the administration computer alone that enables the chairman to fetch documents (drawings, calculations, simulations, video films etc) which are to be shown, or manipulated, via the conference server. This means that the applications software required to open all the documents used in the conference must be resident on the conference server.
(i) Applications software, which is an intuitive and easy to use application enabling the chairperson see and control the status of the conference, is resident on the administration server. Producing such software is a routine matter for those skilled in the art. This software will enable the chairperson to readily see who is connected to the conference server. When somebody makes an attempt to access the server, the access attempt is flagged up to the chairperson for acceptance, or rejection. The applications software produces a log and audit trail for the whole conference.
(j) Network security normally requires the use of encryption, or private networks. This does not happen in the conference environment, In the conference system of the present invention, data security is maintained by permitting only controlled access to the conference server, via a reception unit.

Key elements in the present invention are the conference server and the administration server. From a technical view point, the conference server is a comparatively ordinary computer. However, the administration server is an especially configured firewall/access server, which encapsulates the conference.

A basic concept underlying the present invention, particularly the conference server, is that all participants to the conference have access to a conference program of the type MS Netmeeting. This is resident on the conference server. The participants, via various functional components, such as, "connected application", "whiteboard" etc, participate in the work and/or see ordinary applications which are run on the conference server. Operation of the conference server is, of course, controlled by the chairperson.

Software applications resident on the conference server should, for example, include MS Office, AutoCAD, a video streamer and a video conference program. In constructing the full operational architecture of the conference server applications it is important that priority be given to simplicity, modularity and low cost. Standard software is used to the fullest possible extent. Bespoke software development of system components is to be avoided, as far as possible. However, the control module and its user interface has to be bespoke software.

## Claims

1. A telecommunications system for teleconferencing comprising: a conference server (C) being located within an internal data network, and being adapted to realise conference proceedings involving a number of remote computers (B1, B2, B3), a reception computer (A), said reception computer (A) being located within said internal data network, **cheracterized in that** said reception computer (A) being adapted to provide a firewall preventing access for said remote computers (B1, B2, B3) to said internal network, and said conference server (C), via an external data network; a control and supervision computer (D), said control and supervision computer (D) being located within said internal network, and being connected to said reception computer (A) and said conference server (C), and being adapted to instruct said reception computer (A) to permit, or deny, said computers (B1, B2, B3) to exchange data traffic with said conference server (C) by making use of non-recurrent passwords, and also being adapted to control the operation of said conference server (C).

2. A telecommunications system, as claimed in claim 1, **characterised in that** said conference server (C), said reception computer (A) and said control and supervision computer (D) are a single data processing machine having functionally distinct modules for providing data conference facilities, reception control and conference control.

3. A telecommunications system, as claimed in claim 1, **characterised in that** said conference server (C), said reception computer (A) and said control and supervision computer (D) are separate and distinct data processing machines linked by data connections which are distinct from, and not directly connected to, said internal data network.

4. A telecommunication system, as claimed in any previous claim, **characterised in that** data transmission between said computers (B1, B2, B3) and said conference server (C) employs IP.

5. A telecommunications system, as claimed in any previous claim, **characterised in that** said control and supervision computer (D) enables a conference leader to control said reception computer (A) and thence to control admission to a conference being run on said conference server (C).

6. A telecommunications system, as claimed in any previous claim, **characterised in that** there is provided an audio conference facility operating in conjunction with said conference server (C).

7. A telecommunications system, as claimed in claim 6, **characterised in that** said non-recurrent passwords are issued to participants by said conference leader in a voice communication over said audio conference facility.

8. A telecommunications system, as claimed in any previous claim, **characterised in that** said control and supervision computer (D) enables a conference leader to activate applications software resident on said conference server (C) and to control computer files accessed by said conference server (C), including files containing documents, drawings, calculations, simulations and video film.

9. A telecommunications system, as claimed in any previous claim, **characterised in that** said control and supervision computer (D) reports all attempts to access said conference server (C) to a conference leader.

10. A telecommunications system, as claimed in any previous claim, **characterised in that** said control and supervision computer (D) maintains a log and audit trail of a conference conducted on said conference server (C).

11. A telecommunications system, as claimed in any previous claim, **characterised in that** said conference server (C) includes the following functional components: "connected application" and "whiteboard".

12. A telecommunications system, as claimed in any previous claim, **characterised in that** said conference server (C) has a number of software applications resident thereon, including: word processing, a database, a spreadsheet, a graphics package, a video streamer and a video conference package.

13. A telecommunications system, as claimed in any previous claim, **characterised in that** said participants to said conference can, via computers (B1, B2, B3) and subject to control and supervision by said conference leader, access and manipulate software and data resident on said conference server (C), and thereby cooperatively interact with each other and said conference leader.

14. A method for teleconferencing, with the aid of a telecommunications system comprising an internal data network comprising a conference server (C) a reception computer (A), and a control and supervision computer (D) connected to said conference server (C), and said reception computer (A), said method comprising the steps:
- to connect a number of remote computers (B1. 82, B3) to said internal network, and said conference server (C) via an external data network;
- with the aid of said conference server (C) to realise conference proceedings.
**characterized by** the steps:
- with the aid of said reception computer (A), to provide a firewall preventing access for said remote computers (B1, B2, B3);
- with the aid of said control and supervision computer (D), to instruct said reception computer (A) to permit, or deny, said computers (B1, B2, B3) to exchange data traffic with said conference server (C) by making use of non-recurrent passwords, and to control the operation of said conference server (C).

15. A method, as claimed in claim 14, **characterised by** conference server (C), said reception computer (A) and said control and supervision computer (D) being a single data processing machine having functionally distinct modules for providing data conference facilities, reception control and conference control.

16. A method, as claimed in claim 14, **characterised by** said conference server (C), said reception computer (A) and said control and supervision computer (D) being separate and distinct data processing machines linked by data connections which are distinct from, and not directly connected to, said internal data network.

17. A method, as claimed in any of claims 14 - 16, **characterised by** employing IP for data transmission between said computers (B1, B2, B3) and said conference server (C).

18. A method, as claimed in any of claims 14 - 17, **characterised by** said control and supervision computer (D) enabling a conference leader to control said reception computer (A) and thence to control admission to a conference being run on said conference server(C).

19. A method, as claimed in any previous claim, **characterised in that** there is provided an audio conference facility operating in conjunction with said conference server (C).

20. A method, as claimed in claim 19, **characterised in that** said non-recurrent passwords are issued to participants by said conference leader in a voice communication over said audio conference facility.

21. A method, as claimed in any of claims 14 - 20, **characterised by** a conference leader using said control and supervision computer (D) to activate applications software resident on said conference server (C) and to control computer files accessed by said conference server (C), including files containing documents, drawings, calculations, simulations and video film.

22. A method, as claimed in any of claims 14 - 20, **characterised by** said control and supervision computer (D) reporting all attempts to access said conference server (C) to a conference leader.

23. A method, as claimed in any of claims 14 - 21, **characterised by** said control and supervision computer (D) maintaining a log and audit trail of a conference conducted on said conference server (C).

24. A method, as claimed in any of claims 14 - 23, **characterised by** said conference server (C) having the following functional components: "connected application" and "whiteboard".

25. A method, as claimed in any of claims 14 - 24, **characterised by** said conference server (C) having a number of software applications resident thereon including: word processing, a database, a spreadsheet, a graphics package, a video streamer and a video conference package.

26. A method, as claimed in any of claims 14 - 25, **characterised by** said participants to said conference accessing and manipulating software and data resident on said conference server (C), thereby cooperatively interacting with each other and said conference leader, via said computers (B1, B2, B3) and subject to control and supervision by said conference leader.

## Patentansprüche

1. Fernmeldesystem zum Durchführen von Telekonferenzen, das aufweist: einen Konferenzserver (C), der innerhalb eines internen Datennetzes angeordnet ist und dazu ausgebildet ist, Konferenzvorgänge zu realisieren, die eine Anzahl von entfernten Computern (B1, B2, B3) einbeziehen, einen Empfangscomputer (A), welcher Empfangscomputer (A) innerhalb des internen Datennetzes angeordnet ist, **dadurch gekennzeichnet, dass** der Empfangscomputer (A) dazu ausgebildet ist, eine Firewall zur Verfügung zu stellen, die Zugang für die entfernten Computer (B1, B2, B3) zu dem internen Netz und dem Konferenzserver (C) über ein externes Datennetz verhindert; ein Steuer- und Überwachungscomputer (D), welcher Steuer- und Überwachungscomputer (D) innerhalb des internen Netzes angeordnet ist und mit dem Empfangscomputer (A) und dem Konferenzserver (C) verbunden ist und dazu ausgebildet ist, den Empfangscomputer (A) anzuweisen, den Computern (B1, B2, B3) zu erlauben oder zu verbieten, Datenverkehr mit dem Konferenzserver (C) auszutauschen, indem Verwendung von nichtwiederkehrenden Passworten gemacht wird, und der auch dazu ausgebildet ist, den Betrieb des Konferenzservers (C) zu steuern.

2. Fernmeldesystem nach Anspruch 1, **dadurch gekennzeichnet, dass** der Konferenzserver (C), der Empfangscomputer (A) und der Steuer- und Überwachungscomputer (D) eine einzige Datenverarbeitungsmaschine sind, die funktionell unterschiedliche Module zum zur Verfügung Stellen von Datenkonferenz hat.

3. Fernmeldesystem nach Anspruch 1, **dadurch gekennzeichnete dass** der Konferenzserver (C), der Empfangscomputer (A) und der Steuer- und Überwachungscomputer (D) getrennte und unterschiedliche Datenverarbeitungsmaschinen sind, die durch Datenverbindungen verbunden sind, die unterschiedlich sind von und nicht direkt verbunden sind mit dem internen Datennetz.

4. Fernmeldesystem nach einem vorangehenden Anspruch, **dadurch gekennzeichnet, dass** die Datenübertragung zwischen den Computern (B1, B2, B3) und dem Konferenzserver (C) IP verwendet.

5. Fernmeldesystem nach einem vorangehenden Anspruch, **dadurch gekennzeichnet, dass** der Steuer- und Überwachungscomputer (D) es einem Konferenzleiter ermöglicht, den Empfangscomputer (A) zu kontrollieren und daher Zugang zu einer Konferenz zu kontrollieren, die auf dem Konferenzserver (C) abläuft.

6. Fernmeldesystem nach einem vorangehenden Anspruch, **dadurch gekennzeichnet, dass** eine Audiokonferenzeinrichtung vorgesehen ist, die in Verbindung mit dem Konferenzserver (C) arbeitet.

7. Fernmeldesystem nach Anspruch 6, **dadurch gekennzeichnet, dass** die nichtwiederkehrenden Passworte Teilnehmern durch den Konferenzleiter in einer Sprachkommunikation über die Audiokonferenzeinrichtung ausgegeben werden.

8. Telekommunikationssystem nach einem vorangehenden Anspruch, **dadurch gekennzeichnet, dass** der Steuer- und Überwachungscomputer (D) es einem Konferenzleiter ermöglicht, Anwendungssoftware zu aktivieren, die auf dem Konferenzserver (C) ständig vorhanden ist, und Computerdateien zu kontrollieren, auf die der Konferenzserver (C) Zugriff nimmt einschließlich Dateien die Dokumente, Zeichnungen, Berechnungen, Simulationen und Videofilm enthalten.

9. Fernmeldesystem nach einem vorangehenden Anspruch, **dadurch gekennzeichnet, dass** der Steuer- und Überwachungscomputer (D) alle Versuche dem Konferenzleiter berichtet, auf den Konferenzserver (C) Zugriff zu nehmen.

10. Telekommunikationssystem nach einem vorangehenden Anspruch, **dadurch gekennzeichnet, dass** der Steuer- und Überwachungscomputer (D) ein Protokoll und ein Prüfprotokoll einer Konferenz aufrechterhält, die auf dem Konferenzserver (C) durchgeführt wird.

11. Fernmeldesystem nach einem vorangehenden Anspruch, **dadurch gekennzeichnet, dass** der Konferenzserver (C) die folgenden funktionellen Komponenten einschließt: "Verbundene Anwendung" und "Weißwandtafel".

12. Fernmeldesystem nach einem vorangehenden Anspruch, **dadurch gekennzeichnet, dass** der Konferenzserver (C) eine Anzahl von Softwareanwendungen hat, die darin ständig vorhanden sind, einschließlich Wortverarbeitung, einer Datenbank, eines Spreadsheets, einer Grafikpackung, eines Videostreamers und eines Videokonferenzpakets.

13. Fernmeldesystem nach einem vorangehenden Anspruch, **dadurch gekennzeichnet, dass** die Teilnehmer an der Konferenz über Computer (B1, B2, B3) und in Abhängigkeit von der Kontrolle und Überwachung durch den Konferenzleiter Zugriff auf Software und Daten nehmen können und diese verändern können, die auf dem Konferenzserver (C) ständig vorhanden sind, und **dadurch** zusammenwirkend miteinander und mit dem Konferenzleiter zusammenwirken.

14. Verfahren zum Durchführen von Telekonferenzen mit Hilfe eines Fernmeldenetzes, das ein internes Datennetz aufweist, das einen Konferenzserver (C), einen Empfangscomputer (A) und einen Steuer- und Überwachungscomputer (D) aufweist, der mit dem Konferenzserver (C) und dem Empfangscomputer (A) verbunden ist, welches Verfahren die Schritte aufweist:
- eine Anzahl von entfernten Computern (B1, B2, B3) mit dem internen Netz und dem Konferenzserver (C) über ein externes Datennetz zu verbinden;
- mit der Hilfe des Konferenzservers (C) die Konferenzvorgänge zu realisieren,
**gekennzeichnet durch** die Schritte:
- mit der Hilfe des Empfangscomputers (A) eine Firewall zur Verfügung zur stellen, die Zugang zu den entfernten Computern (B1, B2, B3) verhindert;
- mit der Hilfe des Steuer- und Überwachungscomputers (D) den Empfangscomputer (A) anzuweisen, es den Computern (B1, B2, B3) zu erlauben oder es zu verweigern. Datenverkehr mit dem Konferenzserver (C) auszutauschen, indem Verwendung von nichtwiederkehrenden Passworten gemacht wird, und den Betrieb des Konferenzservers (C) zu steuern; und

15. Verfahren nach Anspruch 14, **dadurch gekennzeichnet, dass** der Konferenzserver (C), der Empfangscomputer (A) und der Steuer- und Überwachungscomputer (D) eine einzige Datenverarbeitungsmaschine sind, die funktionell unterschiedliche Module hat, um Datenkonferenzeinrichtungen, Empfangssteuerung und Konferenzsteuerung zur Verfügung zu stellen.

16. Verfahren nach Anspruch 14, **dadurch gekennzeichnet, dass** der Konferenzserver (C), der Empfangscomputer (A) und der Steuer- und Überwachungscomputer (D) getrennte und unterschiedliche Datenverarbeitungsmaschinen sind, die durch Datenverbindungen verbunden sind, dich unterschiedlich sind von und nicht direkt verbunden sind mit dem internen Datennetz.

17. Verfahren nach einem der Ansprüche 14 bis 16, **gekennzeichnet durch** Verwenden von IP für Datenübertragung zwischen den Computern (B1, B2, B3) und dem Konferenzserver (C).

18. Verfahren nach einem der Ansprüche 14 bis 17, **dadurch gekennzeichnet, dass** der Steuer- und Überwachungscomputer (D) es einem Konferenzleiter ermöglicht, den Empfangscomputer (A) zu kontrollieren und **dadurch** Zugang zu einer Konferenz zu kontrollieren, die auf dem Konferenzserver (C) abläuft.

19. Verfahren nach einem vorangehenden Anspruch, **dadurch gekennzeichnet, dass** eine Audiokonferenzeinrichtung vorgesehen ist, die in Verbindung mit dem Konferensserver (C) arbeitet.

20. Verfahren nach Anspruch 19, **dadurch gekennzeichnet, dass** die nichtwiederkehrenden Passworte Teilnehmern durch den Konferenzleiter in einer Sprachkommunikation über die Audiokonferenzeinrichtung ausgestellt wird.

21. Verfahren nach einem der Ansprüche 14 bis 20, **dadurch gekennzeichnet, dass** ein Konferenzleiter den Steuer-und Überwachungscomputer (D) verwendet, Anwendungssoftware, die dauernd auf dem Konferenzserver (C) vorhanden ist, zu aktivieren und Computerdateien zu kontrollieren, auf die durch den Konferenzserver (C) Zugriff genommen wird, einschließlich Dateien, die Dokumente, Zeichnungen, Berechnungen, Simulationen und Videofilm enthalten.

22. Verfahren nach einem der Ansprüche 14 bis 20, **dadurch gekennzeichnet, dass** der Steuer- und Überwachungscomputer (D) alle Versuche, Zugriff auf den Konferenzserver (C) zu nehmen, dem Konferenzleiter meldet.

23. Verfahren nach einem der Ansprüche 14 bis 21, **dadurch gekennzeichnet, dass** der Steuer- und Überwachungscomputer (D) ein Protokoll und ein Prüfprotokoll einer Konferenz aufrechterhält, die auf dem Konferenzserver (C) durchgeführt wird.

24. Verfahren nach einem der Ansprüche 14 bis 23, **dadurch gekennzeichnet, dass** der Konferenzserver (C) die folgenden funktionellen Komponenten hat: "Verbundene Anwendung" und "Meißwandtafel".

25. Verfahren nach einem der Ansprüche 14 bis 24, **dadurch gekennzeichnete dass** der Konferenzserver (C) eine Anzahl von Softwareanwendungen hat, die dauernd darin vorhanden sind, einschließlich: Wortverarbeitung, einer Datenbank, eines Spreadsheets, eines Grafikpakets, eines Videostreamers und eines Videokonferenzpakets.

26. Verfahren nach einem der Ansprüche 14 bis 25, **dadurch gekennzeichnet, dass** die Teilnehmer an der Konferenz auf Software und Daten Zugriff nehmen, die ständig auf dem Konferenzserver (C) vorhanden sind, und diese manipulieren, wodurch sie zusammenwirkend miteinander und mit dem Konferenzleiter über die Computer (B1, B2, B3) und in Abhängigkeit von Kontrolle und Überwachung durch den Konferenzleiter wechselwirken.

## Revendications

1. Système de télécommunication pour téléconférence comprenant :
un serveur de conférence (C) placé dans un réseau de données interne, et prévu pour réaliser des procédures de conférence impliquant un certain nombre d'ordinateurs distants (B1, B2, B3) ; un ordinateur de réception (A), le dit ordinateur de réception (A) étant placé dans le dit réseau de données interne, **caractérisé en ce que** le dit ordinateur de réception (A) est prévu pour fournir un pare-feu empêchant l'accès pour les dits ordinateurs distants (B1, B2, B3) au dit réseau interne, et au dit serveur de conférence (C), via un réseau de données externe ; un ordinateur de contrôle et de supervision (D), le dit ordinateur de contrôle et de supervision (D) étant placé dans le dit réseau interne et étant connecté au dit ordinateur de réception (A) et au dit serveur de conférence (C), et étant prévu pour instruire le dit ordinateur de réception (A) afin de permettre, ou de refuser, aux dits ordinateurs (B1, B2, B3) un échange de trafic de données avec le dit serveur de conférence (C) par utilisation de mots de passe non récurrents, et étant également prévu pour commander le fonctionnement du dit serveur de conférence (C).

2. Système de télécommunication selon la revendication 1, **caractérisé en ce que** le dit serveur de conférence (C), le dit ordinateur de réception (A) et le dit ordinateur de contrôle et de supervision (D) sont une machine unique de traitement de données ayant des modules fonctionnellement distincts pour fournir des moyens de conférence de données, un contrôle de réception et un contrôle de conférence.

3. Système de télécommunication selon la revendication 1, **caractérisé en ce que** le dit serveur de conférence (C), le dit ordinateur de réception (A) et le dit ordinateur de contrôle et de supervision (D) sont des machines de traitement de données séparées et distinctes reliées par des connexions de données qui sont distinctes du dit réseau de données interne, et non directement connectées à celui-ci.

4. Système de télécommunication selon une quelconque des revendications précédentes, **caractérisé en ce que** la transmission de données entre les dits ordinateurs (B1, B2, B3) et le dit serveur de conférence (C) emploie IP.

5. Système de télécommunication selon une quelconque des revendications précédentes, **caractérisé en ce que** le dit ordinateur de contrôle et de supervision (D) permet à un chef de conférence de commander le dit ordinateur de réception (A) et donc de contrôler l'admission à une conférence fonctionnant sur le dit serveur de conférence (C).

6. Système de télécommunication selon une quelconque des revendications précédentes, **caractérisé en ce qu'**il est prévu un moyen de conférence audio fonctionnant en conjonction avec le dit serveur de conférence (C).

7. Système de télécommunication selon la revendication 6, **caractérisé en ce que** les dits mots de passe non récurrents sont fournis aux participants par le dit chef de conférence dans une communication vocale sur le dit moyen de conférence audio.

8. Système de télécommunication selon une quelconque des revendications précédentes, **caractérisé en ce que** le dit ordinateur de contrôle et de supervision (D) permet à un chef de conférence d'activer un logiciel d'application résidant sur le dit serveur de conférence (C) et de commander des fichiers informatiques auxquels accède le dit serveur de conférence (C), incluant des fichiers contenant des documents, des dessins, des calculs, des simulations et un film vidéo.

9. Système de télécommunication selon une quelconque des revendications précédentes, **caractérisé en ce que** le dit ordinateur de contrôle et de supervision (D) signale toutes les tentatives d'accès au dit serveur de conférence (C) à un chef de conférence.

10. Système de télécommunication selon une quelconque des revendications précédentes, **caractérisé en ce que** le dit ordinateur de contrôle et de supervision (D) conserve un journal et une trace d'audit d'une conférence conduite sur le dit serveur de conférence (C).

11. Système de télécommunication selon une quelconque des revendications précédentes, **caractérisé en ce que** le dit serveur de conférence (C) comprend les composants fonctionnels suivants : « application connectée » et « tableau blanc ».

12. Système de télécommunication selon une quelconque des revendications précédentes, **caractérisé en ce que** le dit serveur de conférence (C) comporte un certain nombre de logiciels d'application qui y résident, incluant : un traitement de texte, une base de données, une feuille de calcul, un ensemble graphique, un dispositif de flux vidéo et un ensemble de conférence vidéo.

13. Système de télécommunication selon une quelconque des revendications précédentes, **caractérisé en ce que** les dits participants à la dite conférence peuvent, via les ordinateurs (B1, B2, B3) et étant soumis à un contrôle et une supervision par le dit chef de conférence, accéder et manipuler les logiciels et les données qui résident sur ledit serveur de conférence (C), et interagir ainsi en coopération mutuelle et avec le dit chef de conférence.

14. Procédé de téléconférence à l'aide d'un système de télécommunication comprenant un réseau de données interne comportant un serveur de conférence (C), un ordinateur de réception (A), et un ordinateur de contrôle et de supervision (D) connecté au dit serveur de conférence (C) et au dit ordinateur de réception (A), le dit procédé comprenant les étapes de :
- connexion d'un certain nombre d'ordinateurs distants (B1, B2, B3) au dit réseau interne, et au dit serveur de conférence (C), via un réseau de données externe ;
- à l'aide du dit serveur de conférence (C), exécution de procédures de conférence :
**caractérisé par** les étapes de :
- à l'aide du dit ordinateur de réception (A), création d'un pare-feu empêchant l'accès pour les dits ordinateurs distants (B1, B2, B3) ;
- à l'aide du dit ordinateur de contrôle et de supervision (D), fourniture d'instructions au dit ordinateur de réception (A) pour permettre, ou refuser, aux dits ordinateurs (B1, B2, B3) d'échanger un trafic de données avec le dit serveur de conférence (C) par utilisation de mots de passe non récurrents, et de commander le fonctionnement du dit serveur de conférence (C).

15. Procédé selon la revendication 14, **caractérisé en ce que** le serveur de conférence (C), le dit ordinateur de réception (A) et le dit ordinateur de contrôle et de supervision (D) sont une machine unique de traitement de données ayant des modules fonctionnellement distincts pour procurer des moyens de conférence de données, un contrôle de réception et un contrôle de conférence.

16. Procédé selon la revendication 14, **caractérisé en ce que** le dit serveur de conférence (C), le dit ordinateur de réception (A) et le dit ordinateur de contrôle et de supervision (D) sont des machines de traitement de données séparées et distinctes reliées par des connexions de données qui sont distinctes du dit réseau de données interne et non directement connectées à celui-ci.

17. Procédé selon une quelconque des revendications 14 à 16, **caractérisé par** l'emploi de IP pour la transmission de données entre les dits ordinateurs (B1, B2, B3) et le dit serveur de conférence (C).

18. Procédé selon une quelconque des revendications 14 à 17, **caractérisé en ce que** le dit ordinateur de contrôle et de supervision (D) permet à un chef de conférence de contrôler le dit ordinateur de réception (A) et donc de contrôler l'admission à une conférence exécutée sur le dit serveur de conférence (C).

19. Procédé selon une quelconque des revendications précédentes, **caractérisé en ce qu'**il est prévu un moyen de conférence audio fonctionnant en conjonction avec le dit serveur de conférence (C).

20. Procédé selon la revendication 19, **caractérisé en ce que** les dits mots de passe non récurrents sont fournis aux participants par le dit chef de conférence dans une communication vocale sur le dit moyen de conférence audio.

21. Procédé selon une quelconque des revendications 14 à 20, **caractérisé en ce qu'**un chef de conférence utilise le dit ordinateur de contrôle et de supervision (D) pour activer un logiciel d'application qui réside sur le dit serveur de conférence (C) et pour contrôler des fichiers informatiques auxquels accède le dit serveur de conférence (C), incluant des fichiers contenant des documents, des dessins, des calculs, des simulations et un film vidéo.

22. Procédé selon une quelconque des revendications 14 à 20, **caractérisé en ce que** le dit ordinateur de contrôle et de supervision (D) signale à un chef de conférence toutes les tentatives d'accès au dit serveur de conférence (C) .

23. Procédé selon une quelconque des revendications 14 à 21, **caractérisé en ce que** le dit ordinateur de contrôle et de supervision (D) conserve un journal et une trace d'audit d'une conférence conduite sur le dit serveur de conférence (C).

24. Procédé selon une quelconque des revendications 14 à 23, **caractérisé en ce que** le dit serveur de conférence (C) comprend les composants fonctionnels suivantes : « application connectée » et « tableau blanc ».

25. Procédé selon une quelconque des revendications 14 à 24, **caractérisé en ce que** le dit serveur de conférence (C) possède un certain nombre de logiciels d'application qui y résident, incluant: un traitement de texte, une base de données, une feuille de calcul, un ensemble graphique, un dispositif de flux vidéo et un ensemble de conférence vidéo.

26. Procédé selon une quelconque des revendications 14 à 25, **caractérisé en ce que** les dits participants à la dite conférence accèdent et manipulent un logiciel et des données qui résident sur le dit serveur de conférence (C), et interagissent ainsi en coopération mutuelle et avec le dit chef de conférence, via les dits ordinateurs (B1, B2, B3) et en étant soumis à un contrôle et une supervision par le dit chef de conférence.
